# EUROPÄISCHE PATENTANMELDUNG

(11) **EP 4 781 876 A1**
(43) Veröffentlichungstag der Anmeldung: **29.07.2026**
(21) Anmeldenummer: 25221831.8
(22) Anmeldetag: 09.12.2025
(51) Int. Cl.: A47J 36/32

(54) **KOCHGESCHIRR UND VERFAHREN ZUM BETREIBEN EINES KOCHGESCHIRRS**

(30) Priorität: 22.01.2025 LU 103514
(71) Anmelder: Miele & Cie. KG, 33332 Gütersloh (DE)
(72) Erfinder: Müller, Christoph, 32289 Rödinghausen (DE)

(57) **Zusammenfassung**

Kochgeschirr (1) mit einem Kochgeschirrgrundkörper und einer Elektronikeinrichtung (3) mit einer Mehrzahl von Elektronikkomponenten (30) und einer Steuereinrichtung (4) zur Ansteuerung der Elektronikkomponenten (30). Dabei umfasst Steuereinrichtung (4) zwei Mikrocontroller (9), nämlich einen Energiesparcontroller (19) und einen Sicherheitscontroller (29). Der Energiesparcontroller (19) ist dazu geeignet und ausgebildet, den Sicherheitscontroller (29) einzuschalten und/oder auszuschalten.

## Beschreibung

Die vorliegende Erfindung betrifft ein Kochgeschirr mit wenigstens einem Kochgeschirrgrundkörper und wenigstens einer Elektronikeinrichtung mit einer Mehrzahl von Elektronikkomponenten. Eine Steuereinrichtung dient zur Ansteuerung der Elektronikkomponenten.

Ein solches Gargeschirr bietet durch seine Elektronikeinrichtung verschiedene Assistenzfunktionen und beispielsweise eine Ansteuerung eines Kochfelds während eines Garvorgangs auf Basis einer Temperaturerfassung im Gargeschirrgrundkörper. Für einen hohen Bedienkomfort weist die Elektronikeinrichtung oft Bedienelemente und eine Anzeige bzw. ein Display auf.

Aufgrund der besonderen Anforderungen ist die Umsetzung der Elektronik bei einem Gargeschirr insgesamt sehr aufwendig bzw. herausfordernd. Um einen sicheren Gebrauch des Kochgeschirrs im Küchenbetrieb zu gewährleisten, müssen zahlreiche normative Anforderungen erreicht oder sogar übertroffen werden. Beispielsweise sollte die Elektronik zur Erfassung und drahtlosen Übertragung der Temperaturwerte besonders störungssicher und zuverlässig ausgeführt werden.

Allerdings hat sich bei Untersuchungen gezeigt, dass die entsprechende sichere Elektronik aufgrund ihrer besonderen Hardware und Software einen deutlich erhöhten Stromverbrauch verursacht. Mit Blick auf eine möglichst lange Lebensdauer bzw. Akkulaufzeit von beispielsweise zehn oder mehr Jahren besteht daher Verbesserungsbedarf. Zudem ergeben sich mit einer solchen Elektronik auch höhere Fertigungskosten.

Demgegenüber ist es die Aufgabe der vorliegenden Erfindung, ein verbessertes Kochgeschirr zur Verfügung zu stellen. Insbesondere sollen ein besonders sicherer und zuverlässiger Betrieb und zugleich ein besonders geringer Energieverbrauch möglich sein. Zugleich soll die Lösung möglichst unaufwendig bzw. wirtschaftlich umsetzbar sein.

Diese Aufgabe wird gelöst durch ein Gargeschirr mit den Merkmalen des Anspruchs 1. Ein erfindungsgemäßes Verfahren ist Gegenstand des Anspruchs 15. Bevorzugte Weiterbildungen der Erfindung sind Gegenstand der Unteransprüche. Weitere Vorteile und Merkmale der Erfindung ergeben sich aus den Ausführungsbeispielen.

Das erfindungsgemäße Kochgeschirr umfasst wenigstens einen Kochgeschirrgrundkörper und wenigstens eine Elektronikeinrichtung. Die Elektronikeinrichtung umfasst eine Mehrzahl von Elektronikkomponenten und wenigstens eine Steuereinrichtung zur Ansteuerung der Elektronikkomponenten. Dabei umfasst die Steuereinrichtung wenigstens zwei (separate) Mikrocontroller. Die wenigstens zwei Mikrocontroller umfassen wenigstens einen Energiesparcontroller und wenigstens einen Sicherheitscontroller. Dabei ist der Energiesparcontroller dazu geeignet und ausgebildet, den Sicherheitscontroller einzuschalten und/oder auszuschalten. Insbesondere ist der Sicherheitscontroller nur dann aktiv, wenn er zuvor durch den Energiesparcontroller eingeschaltet wurde.

Die vorliegende Erfindung bietet viele Vorteile. Einen erheblichen Vorteil bieten die beiden gezielt unterschiedlichen Mikrocontroller. Besonders vorteilhaft ist auch, dass der Sicherheitscontroller über den Energiesparcontroller eingeschaltet bzw. ausgeschaltet wird. Dadurch kann der erhöhte Energieverbrauch der Elektronikeinrichtung, welcher durch die Sicherheitsanforderungen ist, um ein erhebliches Maß reduziert werden. So kann die Batterielebensdauer beispielsweise auf zehn Jahre oder mehr verlängert werden. Dadurch, dass die beiden Mikrocontroller gezielt auf ihre jeweiligen Aufgaben zugeschnitten sind, kann die Erfindung auch besonders wirtschaftlich konstruktiv unaufwendig umgesetzt werden.

Der Energiesparcontroller ist vorzugsweise dazu geeignet und ausgebildet, den Sicherheitscontroller wiederholt und vorzugsweise zyklisch einzuschalten und/oder auszuschalten. Insbesondere erfolgt das Einschalten und/oder Ausschalten wiederholt über die Zeit. Das kann regelmäßig bzw. kontinuierlich oder unregelmäßig und beispielsweise dynamisch erfolgen. Das Einschalten und/oder Ausschalten kann beispielsweise nach einer bestimmten Dauer und/oder zu bestimmten Zeitpunkten erfolgen. Die Dauer bzw. Zeitpunkte sind insbesondere im Energiesparcontroller hinterlegt.

Vorzugsweise ist der Energiesparcontroller dazu geeignet und ausgebildet, die Zeitpunkte und/oder die Dauer und/oder die Häufigkeit des Einschaltens und/oder Ausschaltens des Sicherheitscontrollers in Abhängigkeit eines Betriebszustandes des Kochgeschirrs und insbesondere der Elektronikeinrichtung (dynamisch) einzustellen. Die Dauer des Einschaltens (Einschalt-Dauer) ist insbesondere die Zeit, in welcher der Sicherheitscontroller aktiv bzw. eingeschaltet ist. Die Dauer des Ausschaltens (Ausschalt-Dauer) ist insbesondere die Zeit, in welcher der Sicherheitscontroller ausgeschaltet bzw. inaktiv ist. Die Zeitpunkte und/oder die Dauer und/oder die Häufigkeit des Einschaltens und/oder Ausschaltens können auch (fest) vorgegeben sein.

Insbesondere ist der Betriebszustand des Kochgeschirrs (in dessen Abhängigkeit der Energiesparcontroller den Sicherheitscontroller einstellt) wenigstens dadurch definiert, welche Elektronikkomponente der Mehrzahl von Elektronikkomponenten angesteuert wird und insbesondere aktiv und/oder inaktiv ist. Besonders bevorzugt ist der Betriebszustand des Kochgeschirrs wenigstens dadurch definiert, ob eine sicherheitsrelevante Elektronikkomponente bzw. Sicherheits-Elektronikkomponente angesteuert wird bzw. aktiv und/oder inaktiv ist. Insbesondere ist der Energiesparcontroller dazu geeignet und ausgebildet, den Sicherheitscontroller wenigstens dann einzuschalten, wenn die Sicherheits-Elektronikkomponente (für einen sicherheitsrelevanten Prozess) benötigt wird. Insbesondere ist der Energiesparcontroller dazu geeignet und ausgebildet, den Sicherheitscontroller auszuschalten, wenn die Sicherheits-Elektronikkomponente nicht mehr benötigt wird.

Es ist bevorzugt und vorteilhaft, dass der Energiesparcontroller dazu geeignet und ausgebildet ist, den Sicherheitscontroller wenigstens (nur) zum Start des Kochgeschirrs und vorzugsweise dann, wenn die Elektronikeinrichtung eingeschaltet bzw. hochgefahren wird, einzuschalten. So kann der Sicherheitscontroller bei jedem Start des Kochgeschirrs die sicherheitsrelevanten Elektronikkomponenten und Prozesse ansteuern bzw. überprüfen. Danach kann der Sicherheitscontroller wieder ausgeschaltet werden, sodass möglichst wenig Strom verbraucht wird.

Der Start des Kochgeschirrs umfasst insbesondere ein Einschalten des Kochgeschirrs und beispielsweise ein Hochfahren bzw. Aktivieren der Elektronikeinrichtung. Insbesondere schaltet der Energiesparcontroller den Sicherheitscontroller dann für eine bestimmte Dauer und/oder für wenigstens einen (sicherheitsrelevanten) Prozess ein. Insbesondere erfolgt anschließend wieder ein automatisches Ausschalten des Sicherheitscontrollers. Möglich ist auch, dass der Energiesparcontroller den Sicherheitscontroller auch bei Auftreten einer Störung bzw. Fehlermeldung einschaltet.

Vorzugsweise ist wenigstens eine der Elektronikkomponenten als eine sogenannte Sicherheits-Elektronikkomponente ausgebildet. Die Sicherheits-Elektronikkomponente umfasst insbesondere wenigstens eine elektronische Schutzschaltung (Protectiv Electronic Circuit, PEC) oder ist mit einer solchen wirkverbunden. Insbesondere ist der Sicherheitscontroller zur Ansteuerung und/oder Überwachung einer elektronischen Schutzschaltung ausgebildet. Dabei ist der Energiesparcontroller vorzugsweise dazu geeignet und ausgebildet, den Sicherheitscontroller wenigstens (nur) dann einzuschalten, wenn die Sicherheits-Elektronikkomponente benötigt wird bzw. für einen (sicherheitsrelevanten) Prozess benötigt wird. Insbesondere ist der Energiesparcontroller dazu geeignet und ausgebildet, den Sicherheitscontroller wieder auszuschalten, wenn die Sicherheits-Elektronikkomponenten nicht mehr benötigt wird bzw. nicht mehr angesteuert wird.

Es ist möglich und vorteilhaft, dass die Sicherheits-Elektronikkomponente wenigstens und vorzugsweise nur durch den Sicherheitscontroller ansteuerbar ist. Möglich und vorteilhaft ist auch, dass die Sicherheits-Elektronikkomponente sowohl durch den Sicherheitscontroller als auch durch den Energiesparcontroller ansteuerbar ist. Dabei ist der Energiesparcontroller vorzugsweise dazu geeignet und ausgebildet, den Sicherheitscontroller für wenigstens eine erste Ansteuerung der Sicherheits-Elektronikkomponente einzuschalten und wenigstens eine zweite (nachfolgende oder vorhergehende oder parallele) Ansteuerung der Sicherheits-Elektronikkomponente selbst durchzuführen. Insbesondere wird der Sicherheitscontroller dann wieder ausgeschaltet.

Eine solche Vorgehensweise ist insbesondere für eine Temperaturerfassung mit der Sensoreinrichtung vorgesehen. Beispielsweise kann die Temperaturerfassung sowohl durch den Sicherheitscontroller als auch durch den Energiesparcontroller erfolgen. Das ermöglicht eine hohe Sicherheit und zugleich einen besonders geringen Energieverbrauch. Insbesondere erfolgt nur ein bestimmter Anteil der Temperaturerfassungen mittels des Sicherheitscontrollers. Beispielsweise erfolgt nur nach dem Starten des Kochgeschirrs eine Temperaturerfassung durch den Sicherheitscontroller, insbesondere um die korrekte Funktion der Sensoreinrichtung zu überprüfen. So kann der Sicherheitscontroller nach dem Start des Kochgeschirrs die sicherheitsrelevanten Elektronikkomponenten und Prozesse ansteuern bzw. überprüfen. Wenn alles in Ordnung ist, deaktiviert der Energiesparcontroller den Sicherheitscontroller. Bei Bedarf kann der Energiesparcontroller sogar die zuvor geprüften Prozesse des Sicherheitscontrollers übernehmen.

Als sicherheitsrelevante Prozesse sind beispielsweise die Überprüfung des Ein-/Aus-Schalters, die Prüfung des Temperatursensors, welcher Zulassungsrechtlich als sicherheitsrelevant eingestuft ist. Auch die Prüfung von Speicherregistern für die Umsetzung einer sicherheitsorientierten Software ist ein Beispiel für einen sicherheitsrelevanten Prozess.

Weitere sicherheitsrelevante Prozesse sind beispielsweise die Datenübermittlung, die Auswertung von Tasten, die Ansteuerung von Anzeigen, die Verarbeitung von Updates, der Schlüsselaustausch über NFC für BT um einen man-in-the-middle Angriff auszuschließen.

Insbesondere wird der Sicherheitscontroller eingeschaltet, wenn die Sicherheits-Elektronikkomponente zum ersten Mal nach dem Starten des Kochgeschirrs benötigt bzw. angesteuert wird. Wenigstens eine nachfolgende und insbesondere alle nachfolgenden Ansteuerungen erfolgen dann vorzugsweise durch den Energiesparcontroller (solange das Kochgeschirr eingeschaltet bleibt). Nach dem Ausschalten und Wieder-Einschalten des Kochgeschirrs wird die erste Ansteuerung der Sicherheits-Elektronikkomponente dann vorzugsweise wieder vom Sicherheitscontroller durchgeführt.

In einer vorteilhaften Weiterbildung ist wenigstens eine Sensoreinrichtung zur Temperaturerfassung als Sicherheits-Elektronikkomponente ausgebildet. Insbesondere ist die elektronische Schutzschaltung mit der Sensoreinrichtung wirkverbunden oder Teil einer solchen. In einer solchen Ausführung kann die Sicherheits-Elektronikkomponente auch als Sensoreinrichtung bezeichnet werden. Möglich und vorteilhaft ist auch, dass wenigstens eine Kommunikationseinrichtung zur drahtlosen Kommunikation als Sicherheits-Elektronikkomponente ausgebildet ist. Dazu ist der Energiesparcontroller insbesondere als ein Drahtlos-Übertragung (Bluetooth) Low Energy Controller ausgebildet. Zusätzlich oder alternativ können auch andere Elektronikkomponenten als Sicherheits-Elektronikkomponente ausgebildet sein.Der Energiesparcontroller ist vorzugsweise dazu geeignet und ausgebildet, den eingeschalteten Sicherheitscontroller für eine bestimmte Dauer und/oder zur Umsetzung bestimmter Funktionen eingeschaltet zu lassen und vorzugsweise danach auszuschalten. Insbesondere schaltet der Energiesparcontroller den Sicherheitscontroller bei Bedarf und/oder nach einer bestimmten Dauer und/oder zu einem bestimmten Zeitpunkt und/oder in Abhängigkeit der Anzahl durchgeführter Prozesse wieder aus.

Insbesondere ist Energiesparcontroller dazu geeignet und ausgebildet, den ausgeschalteten Sicherheitscontroller bis zu einem erneuten Starten des Kochgeschirrs und/oder bis zum Auftreten einer Störung im ausgeschalteten Zustand zu belassen. Der Energiesparcontroller kann den ausgeschalteten Sicherheitscontroller auch wenigstens so lange ausgeschaltet lassen, bis die Sicherheits-Elektronikkomponente wieder aktiv ist bzw. wieder angesteuert werden soll.

In einer vorteilhaften Weiterbildung werden die Elektronikkomponente durch wenigstens eine Bedieneinrichtung, wenigstens eine Anzeigeeinrichtung, wenigstens eine Sensoreinrichtung zur Temperaturerfassung und/oder wenigstens eine Kommunikationseinrichtung zur drahtlosen Kommunikation mit wenigstens einem Küchengerät (insbesondere einer Kochfeldeinrichtung) bereitgestellt. Dabei ist der Energiesparcontroller vorzugsweise dazu geeignet und ausgebildet, wenigstens eine dieser Elektronikkomponenten anzusteuern und/oder wenigstens eine der Funktionen bzw. Prozesse wenigstens einer dieser Elektronikkomponenten bereitzustellen. Insbesondere betrifft das wenigstens zwei oder wenigstens drei oder wenigstens vier oder auch sämtliche Elektronikkomponenten. Es ist möglich, dass der Energiesparcontroller sämtliche Elektronikkomponenten oder zumindest die Elektronikkomponenten, welche nicht eine Sicherheits-Elektronikkomponente bereitstellen, ansteuern kann.

In allen Ausgestaltungen ist es bevorzugt, dass der Energiesparcontroller im bestimmungsgemäßen Betrieb der Elektronikeinrichtung weniger Energie als der Sicherheitscontroller benötigt. Insbesondere weist der Energiesparcontroller im bestimmungsgemäßen Betrieb der Elektronikeinrichtung einen geringeren Stromverbrauch als der Sicherheitscontroller auf. Das betrifft insbesondere die von der Energiespeichereinrichtung bereitgestellte Energie. Möglich und ist auch, dass der Energiesparcontroller eine geringere (Nenn-) Leistungsaufnahme und insbesondere eine geringere mittlere und/oder maximale Leistungsaufnahme als der Sicherheitscontroller aufweist. Daher ist es von Vorteil, dass der Sicherheitscontroller nur möglichst kurz durch den Energiesparcontroller eingeschaltet wird.

Es ist möglich und vorteilhaft, dass der Energiesparcontroller und der Sicherheitscontroller derart miteinander verschaltet sind, dass der Energiesparcontroller unabhängig von dem Sicherheitscontroller mit einem Software-Update aktualisiert (geupdatet) werden kann. Insbesondere sind der Energiesparcontroller und der Sicherheitscontroller unabhängig voneinander aktualisierbar. Auch dadurch kann der Stromverbrauch reduziert werden.

Es ist möglich und vorteilhaft, dass mit dem Energiesparcontroller mehr Elektronikkomponenten als mit dem Sicherheitscontroller ansteuerbar sind.

Insbesondere sind mehr Elektronikkomponenten mit dem Energiesparcontroller als mit dem Sicherheitscontroller wirkverbunden. Insbesondere weist der Energiesparcontroller einen größeren Funktionsumfang als der Sicherheitscontroller auf. Insbesondere kann der Energiesparcontroller mehr Funktionen und/oder mehr Prozesse ausführen als der Sicherheitscontroller. Insbesondere weist der Energiesparcontroller einen größeren Speicher als der Sicherheitscontroller auf. Insbesondere weist der Energiesparcontroller (wenigstens im bestimmungsgemäßen Betrieb der Elektronikeinrichtung oder bauartbedingt) eine geringere Taktfrequenz als der Sicherheitscontroller auf.

Das erfindungsgemäße Verfahren dient zum Betreiben des erfindungsgemäßen Kochgeschirrs oder einer seiner Ausgestaltungen. Das hier vorgestellte Kochgeschirr ist insbesondere dazu geeignet und ausgebildet, das erfindungsgemäße Verfahren auszuführen bzw. nach dem erfindungsgemäßen Verfahren betrieben zu werden. Insbesondere ist die Steuereinrichtung dazu geeignet und ausgebildet, die verfahrensartig beschriebenen Schritte auszuführen.

Der Mikrocontroller ist insbesondere als ein Halbleiterchip ausgebildet oder umfasst wenigstens einen solchen. Der Mikrocontroller umfasst insbesondere wenigstens einen Prozessor und vorzugsweise auch wenigstens eine Peripheriefunktion und beispielsweise wenigstens einen Arbeitsspeicher und/oder Programmspeicher. Der Mikrocontroller kann wenigstens einen Mikroprozessor umfassen oder als solcher ausgebildet sein. Die Mikrocontroller sind insbesondere dazu ausgebildet, mittels der jeweiligen Elektronikkomponente wenigstens einen Prozess auszuführen bzw. umzusetzen.

Der Energiesparcontroller kann auch als Niedrigenergie-Controller bzw. Low Energy Controller bezeichnet werden. Der Sicherheitscontroller kann auch als Safety Controller bezeichnet werden. Die Bedieneinrichtung kann als eine berührungsempfindliche Oberfläche ausgebildet sein oder berührungsempfindliche Oberflächenabschnitte umfassen. Die Bedieneinrichtung kann wenigstens teilweise in die Anzeigeeinrichtung integriert sein (berührungssensitive Anzeige bzw. Touchscreen oder dergleichen).

Die Kommunikationseinrichtung ist insbesondere zur drahtlosen Kommunikation nach dem Bluetooth-Standard oder einem anderen geeigneten Standard ausgebildet. Die Mikrocontroller umfassen insbesondere Hard- und Software. Vorzugsweise sind der Energiesparcontroller und der Sicherheitscontroller separat ausgebildet und insbesondere als separate Mikrocontroller bzw. separate elektronische Komponenten ausgeführt. Insbesondere werden die Elektronikkomponenten wenigstens teilweise durch wenigstens einen der Mikrocontroller bereitgestellt.

Das Kochgeschirr umfasst insbesondere wenigstens eine Energiespeichereinrichtung zur Energieversorgung der Elektronikeinrichtung. Die Energiespeichereinrichtung umfasst wenigstens einen Akku bzw. wenigstens eine Batterie oder einen Pufferkondensator. Der Kochgeschirrgrundkörper umfasst insbesondere wenigstens einen Boden und wenigstens eine Wandung. Insbesondere wird durch den Boden und die Wandung wenigstens ein Aufnahmevolumen für das Gargut begrenzt.

Der Garvorgang wird durch die Elektronik des Kochfeldes gesteuert, wobei das Kochgeschirr eine sichere Temperaturauswertung durchführt und die Tasten auswertet, Daten an das Kochfeld übermittelt, Daten vom Kochfeld empfängt. Die Anzeigen des Kochgeschirrs steuert das Kochgeschirr, bzw. dessen Elektronik eigenständig oder auf einen Befehl der Elektronik des Kochfeldes. Das Kochgeschirr, bzw. dessen Elektronik empfängt eigenständig die Daten für ein Update und führt das Update aus.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine rein schematische Darstellung eines erfindungsgemäßen Kochgeschirrs in einer perspektivischen Ansicht; und
- Figur 2: eine rein schematische Darstellung einer Verschaltung eines erfindungsgemäßen Kochgeschirrs.

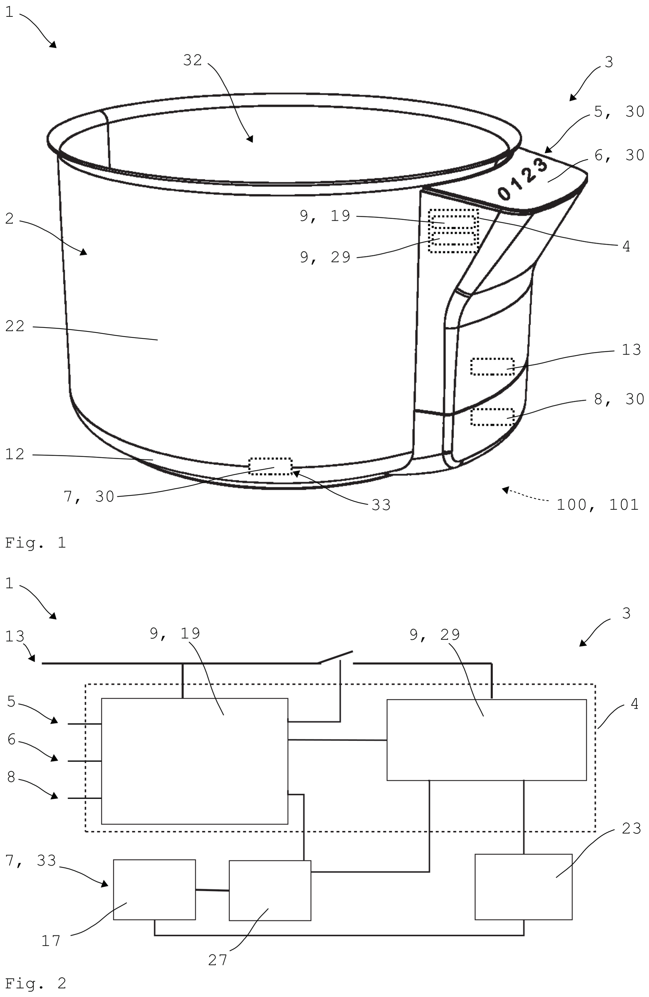

Die Figur 1 zeigt ein erfindungsgemäßes Kochgeschirr 1 mit einem Kochgeschirrgrundkörper 2 mit einem Boden 12 und einer Wandung 22 sowie einem Aufnahmevolumen 32 für Gargut. Das Kochgeschirr 1 ist mit einer Elektronikeinrichtung 3 zur Bereitstellung von Assistenzfunktion für Garprozesse ausgestattet. Das hier vorgestellte Kochgeschirr 1 wird nach dem erfindungsgemäßen Verfahren betrieben.

Die Elektronikeinrichtung 3 umfasst mehrere Elektronikkomponenten 30 und z. B. eine Bedieneinrichtung 5, eine Anzeigeeinrichtung 6 und eine Sensoreinrichtung 7 zur Temperaturerfassung sowie eine Kommunikationseinrichtung 8 zur drahtlosen Kommunikation (z. B. Bluetooth) mit einem hier nicht dargestellten Küchengerät 100 und beispielsweise einer Kochfeldeinrichtung 101. Zur Energieversorgung der Elektronikeinrichtung 3 ist eine Energiespeichereinrichtung 13 und beispielsweise eine Batterie und/oder ein Akku und/oder ein Pufferkondensator vorgesehen.

Eine Steuereinrichtung 4 ist mit der Elektronikeinrichtung 3 wirkverbunden und kann deren Elektronikkomponenten 30 ansteuern bzw. deren Funktionen umsetzen. Damit die Steuereinrichtung 4 sowohl einen umfangreichen und besonders sicheren Betrieb des Kochgeschirrs gewährleistet als auch einen möglichst geringen Stromverbrauch aufweist, ist sie mit zwei separaten unterschiedlichen Mikrocontrollern 9 ausgestattet.

Der eine Mikrocontroller 9 ist ein Energiesparcontroller 19, welcher die grundlegenden Prozesse zur Ausführung der Assistenzfunktionen ansteuert. Das sind zum Beispiel die Kommunikation (z. B. Bluetooth-Schnittstelle), die Temperaturermittlung, die Auswertung der Bedieneinrichtung 5 und die Ansteuerung der Anzeigeeinrichtung 6 (z.B. Touch-Elektronik). Der zweite Mikrocontroller 9 ist als Sicherheitscontroller 29 ausgebildet. Dadurch werden die normativen Anforderungen für eine sichere Integration der Elektronikeinrichtung 3 in das Kochgeschirr 1 erfüllt oder sogar übertroffen.

Die Umsetzung der normativen Anforderungen in der Hard- und Software verursachen üblicherweise einen deutlich erhöhten Stromverbrauch, wodurch die Lebensdauer der Energiespeichereinrichtung 13 erheblich verkürzt werden würde. Zudem ergibt sich aufgrund der Sicherheitsanforderungen ein erhöhter Speicherbedarf, wodurch höhere Kosten anfallen. Dadurch, dass bei der hier vorgestellten Erfindung diese Anforderungen bzw. Aufgaben gezielt auf die beiden Mikrocontroller 9 aufgeteilt werden, werden die Assistenzfunktionen besonders sicher und zugleich umfangreich verwirklicht, ohne dass die Lebensdauer der Energiespeichereinrichtung 13 unerwünscht eingeschränkt werden würde.

Um sicherzustellen, dass das der Betrieb des Sicherheitscontrollers 29 nicht zu einem unerwünscht erhöhten Stromverbrauch führt, wird dieser durch den Energiesparcontroller 19 gezielt ein- und ausgeschaltet. Beispielsweise wird der Sicherheitscontroller 29 zyklisch ein- und ausgeschaltet, um die Sicherheitsfunktionen bzw. die dazu erforderlichen Berechnungen durchzuführen.

In einer vorteilhaften Variante können die Zeiten für das Ein- und Ausschalten variieren. Beispielsweise schaltet der Energiesparcontroller 19 den Sicherheitscontroller 29 bei sicherheitsrelevanten Prozessen bzw. aus der Sicht der Sicherheit kritischen Use Cases häufiger ein. Bei weniger relevanten bzw. unkritischen Use Cases wird der Sicherheitscontroller 29 dann gar nicht oder möglichst wenig aktiviert.

Bei einem beispielhaften Betrieb werden die Überprüfung der Sicherheitsfunktionen und die dazu erforderlichen Berechnungen zum Beispiel nur je einmal nach Start des Kochgeschirrs 1 durchgeführt. Dann bleibt der Sicherheitscontroller 29 bis zum nächsten Start des Kochgeschirrs 1 ausgeschaltet. Dadurch kann der Stromverbrauch in erheblichen Umfang reduziert werden.

Der Sicherheitscontroller 29 weist hier einen entsprechend kleinen Speicher auf, da der Applikationsteil für die Assistenzfunktionen (Bedienung, Anzeige etc.) in dem separaten und hinsichtlich des Energieverbrauchs optimierten Energiesparcontrollers 19 ausgelagert ist.

Zudem ist die Software in dem separaten Energiesparcontroller 19 erheblich einfacher bzw. weniger komplex ausgeführt, da dieser keine normativen Sicherheitsfunktionen übernehmen muss. Da dadurch auch weniger Rechenleistung erforderlich ist, kann die Taktfrequenz des Energiesparcontrollers 19 zusätzlich gesenkt werden, wodurch sich der Stromverbrauch weiter reduziert.

In dem Energiesparcontroller 19 wird hier keine sicherheitsrelevante bzw. sicherheitsorientierte Software eingesetzt bzw. verarbeitet. Dadurch kann die Aktualisierung bzw. Update-Strategie einfacher umgesetzt werden. Beispielsweise kann der Applikationsteil im Energiesparcontroller 19 geupdatet werden, ohne die sicherheitsrelevante Software zu verändern bzw. zu beeinflussen, da diese Software in den Sicherheitscontroller 29 ausgelagert ist.

Die Figur 2 zeigt eine beispielhafte Verschaltung der Elektronikeinrichtung 3 und der Steuereinrichtung 4, wie sie beispielsweise bei dem zu vorgeschriebenen Kochgeschirr 1 umgesetzt werden kann. Der Energiesparcontroller 19 steuert hier z. B. die Bedieneinrichtung 5, die Anzeigeeinrichtung 6 und die Kommunikationseinrichtung 8 an. Beispielsweise ist der Energiesparcontroller 19 dazu als ein BLE-Controller (Bluetooth Low Energy Controller) ausgebildet.

Die Sensoreinrichtung 7 für die Temperaturmessung ist hier mit einem Thermoelement 17 und einer Signalaufbereitung 27 ausgestattet und als eine Sicherheits-Elektronikkomponente 33 ausgebildet. Dazu ist die Sensoreinrichtung 7 mittels einer elektronischen Schutzschaltung (PEC) 23 mit dem Sicherheitscontroller 29 verschaltet. Zusätzlich oder alternativ kann zum Beispiel auch die Kommunikationseinrichtung 8 als eine Sicherheits-Elektronikkomponente 33 ausgeführt sein.

In einem beispielhaften Betrieb wird das Kochgeschirr 1 über die Bedieneinrichtung 5 eingeschaltet. Sodann startet der Energiesparcontroller 19 und aktiviert den Sicherheitscontroller 29, damit dieser eine Sicherheitsmessung zum Beispiel einmalig durchführt. Wenn dabei festgestellt wird, dass das System einwandfrei und sicher funktioniert, schaltet der Energiesparcontroller 19 den Sicherheitscontroller 29 wieder aus.

Beispielsweise überprüft der eingeschaltete Sicherheitscontroller 29 das Thermoelement 17 und die Signalaufbereitung 27 und/oder die Schutzschaltung 23 und führt testweise eine Temperaturmessung durch. Das Ergebnis der Überprüfung bzw. der Temperaturmessung übermittelt der Sicherheitscontroller 29 dann an den Energiesparcontroller 19. In einer vorteilhaften Variante können die nachfolgenden Temperaturmessungen, beispielsweise während eines Kochbetriebs, wieder von dem Energiesparcontroller 19 direkt durchgeführt werden, sodass der Stromverbrauch wieder sinkt und die Batterielebensdauer steigt.

### Bezugszeichenliste

- 1: Kochgeschirr
- 2: Kochgeschirrgrundkörper
- 3: Elektronikeinrichtung
- 4: Steuereinrichtung
- 5: Bedieneinrichtung
- 6: Anzeigeeinrichtung
- 7: Sensoreinrichtung
- 8: Kommunikationseinrichtung
- 9: Mikrocontroller
- 12: Boden
- 13: Energiespeichereinrichtung
- 17: Thermoelement
- 19: Energiesparcontroller
- 22: Wandung
- 23: Schutzschaltung
- 27: Signalaufbereitung
- 29: Sicherheitscontroller
- 30: Elektronikkomponente
- 32: Aufnahmevolumen
- 33: Sicherheits-Elektronikkomponente
- 100: Küchengerät
- 101: Kochfeldeinrichtung

## Patentansprüche

1. Kochgeschirr (1) umfassend wenigstens einen Kochgeschirrgrundkörper (2) und wenigstens eine Elektronikeinrichtung (3) mit einer Mehrzahl von Elektronikkomponenten (30) und wenigstens einer Steuereinrichtung (4) zur Ansteuerung der Elektronikkomponenten (30),
**dadurch gekennzeichnet,**
**dass** die Steuereinrichtung (4) wenigstens zwei Mikrocontroller (9) umfasst, nämlich wenigstens einen Energiesparcontroller (19) und wenigstens einen Sicherheitscontroller (29), und dass der Energiesparcontroller (19) dazu geeignet und ausgebildet ist, den Sicherheitscontroller (29) einzuschalten und/oder auszuschalten.

2. Kochgeschirr (1) nach dem vorhergehenden Anspruch, **dadurch gekennzeichnet, dass** der Energiesparcontroller (19) dazu geeignet und ausgebildet ist, den Sicherheitscontroller (29) wiederholt und vorzugsweise zyklisch einzuschalten und/oder auszuschalten.

3. Kochgeschirr (1) nach einem der vorhergehenden Ansprüche, **dadurch gekennzeichnet, dass** der Energiesparcontroller (19) dazu geeignet und ausgebildet ist, die Zeitpunkte und/oder die Dauer und/oder die Häufigkeit des Einschaltens und/oder Ausschaltens in Abhängigkeit eines Betriebszustands des Kochgeschirrs (1) einzustellen.

4. Kochgeschirr (1) nach dem vorhergehenden Anspruch, **dadurch gekennzeichnet, dass** der Betriebszustand des Kochgeschirrs (1) wenigstens dadurch definiert ist, welche Elektronikkomponente (30) angesteuert wird und insbesondere aktiv und/oder inaktiv ist.

5. Kochgeschirr (1) nach einem der vorhergehenden Ansprüche, **dadurch gekennzeichnet, dass** der Energiesparcontroller (19) dazu geeignet und ausgebildet ist, den Sicherheitscontroller (29) wenigstens zum Start des Kochgeschirrs (1) einzuschalten.

6. Kochgeschirr (1) nach einem der vorhergehenden Ansprüche, **dadurch gekennzeichnet, dass** wenigstens eine der Elektronikkomponenten (30) eine sog. Sicherheits-Elektronikkomponente (33) ist, welche insbesondere wenigstens eine elektronische Schutzschaltung (23) (engl. Protective Electronic Circuit, PEC) umfasst oder mit einer solchen wirkverbunden ist und dass der Energiesparcontroller (19) dazu geeignet und ausgebildet ist, den Sicherheitscontroller (29) wenigstens dann einzuschalten, wenn die Sicherheits-Elektronikkomponente (33) benötigt bzw. angesteuert wird.

7. Kochgeschirr (1) nach dem vorhergehenden Anspruch, **dadurch gekennzeichnet, dass** die Sicherheits-Elektronikkomponente (33) nur durch den Sicherheitscontroller (29) ansteuerbar ist oder dass die Sicherheits-Elektronikkomponente (33) sowohl durch den Sicherheitscontroller (29) als auch den Energiesparcontroller (19) ansteuerbar ist und dass der Energiesparcontroller (19) insbesondere dazu geeignet und ausgebildet ist, den Sicherheitscontroller (29) für wenigstens eine erste Ansteuerung der Sicherheits-Elektronikkomponente (33) einzuschalten und wenigstens eine zweite Ansteuerung der Sicherheits-Elektronikkomponente (33) selbst durchzuführen.

8. Kochgeschirr (1) nach einem der beiden vorhergehenden Ansprüche, **dadurch gekennzeichnet, dass** wenigstens eine Sensoreinrichtung (7) zur Temperaturerfassung als Sicherheits-Elektronikkomponente (33) ausgebildet ist.

9. Kochgeschirr (1) nach einem der vorhergehenden Ansprüche, **dadurch gekennzeichnet, dass** der Energiesparcontroller (19) dazu geeignet und ausgebildet ist, den eingeschalteten Sicherheitscontroller (29) für eine bestimmte Dauer und/oder zur Umsetzung bestimmter Funktionen eingeschaltet zu lassen und danach auszuschalten.

10. Kochgeschirr (1) nach einem der vorhergehenden Ansprüche, **dadurch gekennzeichnet, dass** der Energiesparcontroller (19) dazu geeignet und ausgebildet ist, den ausgeschalteten Sicherheitscontroller (29) bis zu einem nächsten Start des Kochgeschirrs (1) und/oder bis zum Auftreten einer Störung ausgeschaltet zu lassen.

11. Kochgeschirr (1) nach einem der vorhergehenden Ansprüche, **dadurch gekennzeichnet, dass** die Elektronikkomponenten (30) durch wenigstens eine Bedieneinrichtung (5) und wenigstens eine Anzeigeeinrichtung (6) und wenigstens eine Sensoreinrichtung (7) zur Temperaturerfassung und wenigstens eine Kommunikationseinrichtung (8) zur drahtlosen Kommunikation mit wenigstens einem Küchengerät (100) und zum Beispiel einer Kochfeldeinrichtung (101) bereitgestellt werden und dass der Energiesparcontroller (19) dazu geeignet und ausgebildet ist, wenigstens eine dieser Elektronikkomponenten (30) anzusteuern und/oder wenigstens eine der Funktionen wenigstens einer dieser Elektronikkomponenten (30) bereitzustellen.

12. Kochgeschirr (1) nach einem der vorhergehenden Ansprüche, **dadurch gekennzeichnet, dass** der Energiesparcontroller (19) im bestimmungsgemäßen Betrieb der Elektronikeinrichtung (3) weniger Energie als der Sicherheitscontroller (29) benötigt.

13. Kochgeschirr (1) nach einem der vorhergehenden Ansprüche, **dadurch gekennzeichnet, dass** der Energiesparcontroller (19) und der Sicherheitscontroller (29) derart miteinander verschaltet sind, dass der Energiesparcontroller (19) unabhängig von dem Sicherheitscontroller (29) mit einem Software-Update aktualisiert werden kann.

14. Kochgeschirr (1) nach einem der vorhergehenden Ansprüche, **dadurch gekennzeichnet, dass** mit dem Energiesparcontroller (19) mehr Elektronikkomponenten (30) als mit dem Sicherheitscontroller (29) ansteuerbar sind.

15. Verfahren zum Betreiben eines Kochgeschirrs (1) nach einem der Ansprüche 1 bis 13.
